# EUROPEAN PATENT SPECIFICATION

(11) **EP 1 292 627 B1**
(45) Date of publication and mention of the grant of the patent: **26.01.2005**
(21) Application number: 01905407.1
(22) Date of filing: 02.02.2001
(51) Int. Cl.: C08F 12/02

(54) **HYDROGENATED MONOVINYLIDENE AROMATIC POLYMER COMPOSITIONS**
HYDRIERTE MONOVINYLIDENAROMATISCHE POLYMERZUSAMMENSETZUNGEN
COMPOSITIONS POLYMERIQUES AROMATIQUES DE MONOVINYLIDENE

(30) Priority: 23.03.2000 US 191630 P
(43) Date of publication of application: 19.03.2003
(73) Proprietor: Dow Global Technologies, Inc., Midland, Michigan 48674 (US)
(72) Inventor: HAHN, Stephen, F., Midland, MI 48642 (US); MARRA, Jill, R., Beaverton, MI 48612 (US)
(74) Representative: Raynor, John
(86) International application number: PCT/US2001/003567
(87) International publication number: WO 2001/070833

(56) References cited:
- WO-A-00/77095
- US-A- 4 212 792
- US-A- 4 885 337
- US-A- 5 352 744
- US-A- 5 612 422
- US-A- 5 645 253

## Description

This invention relates to compositions of hydrogenated monovinylidene aromatic polymers.

Hydrogenated homopolymers of vinyl aromatic monomers and hydrogenated block copolymers of vinyl aromatic and conjugated dienes such as styrene-butadiene-styrene copolymers are well known in the art. Although these hydrogenated copolymers have been tested in various applications, they suffer from one or more shortcomings, including low heat resistance, poor physical properties, poor processability, low heat resistance and poor light stability. Attempts have been made to remedy these shortcomings by increasing the hydrogenation of the aromatic ring. Although increased hydrogenation improves some physical properties, the hydrogenated polymers still lack toughness and adequate heat distortion temperature for certain applications.

Therefore, there remains a need for toughened hydrogenated polymers which will provide improved toughness and increased heat distortion temperature.

The present invention is directed to a composition comprising:
a) a hydrogenated aromatic polymer, wherein the hydrogenated aromatic polymer has an aromatic hydrogenation level of at least 90 percent,
b) an inorganic filler, and
c) a hydrogenated aromatic polymer, wherein the hydrogenated polymer has an aromatic hydrogenation level of at least 90 percent and contains a polar functional group.

Another aspect of the present invention relates to polar functional group modified hydrogenated aromatic polymers produced from a monovinylidene aromatic polymer which has been hydrogenated to a level of at least 90 percent aromatic hydrogenation.

These compositions have an excellent combination of toughness, modulus, high heat distortion temperature and retention of properties at increased temperatures.

Hydrogenated aromatic polymers include hydrogenated homopolymers and block copolymers, prepared by hydrogenating a homopolymer produced from a vinyl aromatic monomer, or block copolymer produced from a vinyl aromatic monomer and a conjugated diene monomer.

The vinyl aromatic monomer is typically a monomer of the formula: 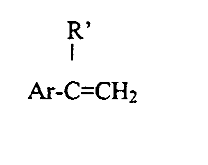 wherein R' is hydrogen or alkyl, Ar is phenyl, halophenyl, alkylphenyl, alkylhalophenyl, naphthyl, pyridinyl, or anthracenyl, wherein any alkyl group contains 1 to 6 carbon atoms which may be mono or multisubstituted with functional groups such as halo, nitro, amino, hydroxy, cyano, carbonyl and carboxyl. More preferably Ar is phenyl or alkyl phenyl with phenyl being most preferred. Typical vinyl aromatic monomers include styrene, alpha-methylstyrene, all isomers of vinyl toluene, especially paravinyltoluene, all isomers of ethyl styrene, propyl styrene, butyl styrene, vinyl biphenyl, vinyl naphthalene, and vinyl anthracene, and mixtures thereof. Preferably a homopolymer is produced from a styrene or alpha-methylstyrene monomer.

Preferably the number average molecular weight (Mn) of the homopolymer is from 80,000 to 1,000,000, more preferably from 100,000 to 400,000, and most preferably from 120,000 to 350,000.

Copolymers include those produced from a vinyl aromatic monomer as previously described, and an additional monomer containing olefinic or aromatic unsaturation. Copolymers include styrene-alpha-methylstyrene and copolymers of a vinyl aromatic monomer and a comonomer selected from the group consisting of a nitrile, acrylate, acid, ethylene, propylene, maleic anhydride, maleimide, vinyl acetate and vinyl chloride and a conjugated diene monomer. Preferably, the copolymers are block copolymer of a vinyl aromatic and conjugated diene monomer. Block copolymers can contain more than one specific polymerized vinyl aromatic monomer. In other words, the block copolymer can contain a polystyrene block and a poly-alpha-methylstyrene block. The hydrogenated vinyl aromatic polymer block of a block copolymer can also be a copolymer wherein the hydrogenated vinyl aromatic component is at least 50 weight percent of the copolymer.

The conjugated diene monomer can be any monomer having 2 conjugated double bonds. Such monomers include for example 1,3-butadiene, 2-methyl-1,3-butadiene, 2-methyl-1,3 pentadiene, isoprene and similar compounds, and mixtures thereof. The block copolymer can contain more than one specific polymerized conjugated diene monomer. In other words, the block copolymer can contain a polybutadiene block and a polyisoprene block.

The conjugated diene polymer block can be prepared from materials which remain amorphous after the hydrogenation process, or materials which are capable of crystallization after hydrogenation. Hydrogenated polyisoprene blocks remain amorphous, while hydrogenated polybutadiene blocks can be either amorphous or crystallizable depending upon their structure. Polybutadiene can contain either a 1,2 configuration, which hydrogenates to give the equivalent of a 1-butene repeat unit, or a 1,4-configuration, which hydrogenates to give the equivalent of an ethylene repeat unit. Polybutadiene blocks having at least approximately 40 weight percent 1,2-butadiene content, based on the weight of the polybutadiene block, provides substantially amorphous blocks with low glass transition temperatures upon hydrogenation. Polybutadiene blocks having less than approximately 40 weight percent 1,2-butadiene content, based on the weight of the polybutadiene block, provide crystalline blocks upon hydrogenation. Depending on the final application of the polymer it may be desirable to incorporate a crystalline block (to improve solvent resistance) or an amorphous, more compliant block. In some applications, the block copolymer can contain more than one conjugated diene polymer block, such as a polybutadiene block and a polyisoprene block. The conjugated diene polymer block may also be a copolymer of a conjugated diene, wherein the conjugated diene portion of the copolymer is at least 50 weight percent of the copolymer. The conjugated diene polymer block may also be a copolymer of more than one conjugated diene, such as a copolymer of butadiene and isoprene. Other polymeric blocks may also be included in the hydrogenated block copolymers used in the present invention.

A block is herein defined as a polymeric segment of a copolymer which exhibits microphase separation from a structurally or compositionally different polymeric segment of the copolymer. Microphase separation occurs due to the incompatibility of the polymeric segments within the block copolymer. Microphase separation and block copolymers are widely discussed in "Block Copolymers-Designer Soft Materials", PHYSICS TODAY, February, 1999, pages 32-38.

The hydrogenated block copolymers typically have a weight ratio of hydrogenated conjugated diene polymer block to hydrogenated vinyl aromatic polymer block of from 40:60 to 5:95, preferably from 35:65 to 10:90, more preferably from 30:70 to 15:85, based on the total weight of the hydrogenated conjugated diene polymer block and the hydrogenated vinyl aromatic polymer block. The total weights of the hydrogenated vinyl aromatic polymer blocks and the hydrogenated conjugated diene polymer block(s) is typically at least 80 weight percent, preferably at least 90, and more preferably at least 95 weight percent of the total weight of the hydrogenated copolymer.

The hydrogenated block copolymers of the present invention are produced by the hydrogenation of block copolymers including triblock, multiblock, tapered block, and star block copolymers such as SBS, SBSBS, SIS, SISIS, and SISBS (wherein S is polystyrene, B is polybutadiene and I is polyisoprene). The block copolymers contain at least one triblock segment comprised of a vinyl aromatic polymer block on each end. The block copolymers may, however, contain any number of additional blocks, wherein these blocks may be attached at any point to the triblock polymer backbone. Thus, linear blocks would include for example SBS, SBSB, SBSBS, and SBSBSB. The copolymer can also be branched, wherein polymer chains are attached at any point along the copolymer backbone. It should be noted here that in the production of block copolymers, it is expected that small amounts of intermediate block copolymers are also produced.

The total weight average molecular weight (Mn) of the block copolymers is typically from 24,000, preferably from 30,000, more preferably from 45,000 and most preferably from 50,000 to 150,000, typically to 135,000, generally to 115,000, preferably to 100,000, more preferably to 90,000, and most preferably to 85,000. The Mn, as referred to throughout this specification, is determined by gel permeation chromatography (GPC). The molecular weight of the hydrogenated block copolymer and properties obtained are dependent upon the molecular weight of each of the hydrogenated polymeric blocks.

It should be noted that good properties are obtained at hydrogenated vinyl aromatic polymer molecular weights which are lower than the entanglement molecular weight of the hydrogenated vinyl aromatic polymer. The entanglement molecular weight of a polymer is associated with the chain length required for a given polymer to show a dramatic increase in melt viscosity due to chain entanglements. The entanglement molecular weights for many common polymers have been measured and reported in Macromolecules, 1994, Volume 27, page 4639. It is commonly observed for glassy polymers that maximum values of strength and toughness are achieved at about 10 times the entanglement molecular weight (see, for instance, Styrene Polymers in the Encyclopedia of Polymer Science and Engineering, 2nd edition, Volume 16, pages 62-71, 1989). The entanglement molecular weight is approximately 38,000 for hydrogenated polystyrene (polyvinylcyclohexane). We have determined that an optimum balance of properties and processability can be obtained at hydrogenated vinyl aromatic polymer block molecular weights (Mn) of 0.2 to 1.2 times the entanglement molecular weight of a hydrogenated vinyl aromatic polymer.

The Mn of the vinyl aromatic polymer block will typically be from 6,000, preferably from 10,000, more preferably from 15,000 and most preferably from 20,000 to 60,000, preferably to 50,000, more preferably to 45,000 and most preferably to 40,000. The diene polymer block will typically be from 4,000, preferably from 8,000, more preferably from 10,000, and most preferably from 12,000 to 30,000, preferably to 28,000, most preferably to 25,000 and most preferably to 22,000.

It is important to note that each individual block of the hydrogenated block copolymer of the present invention, can have its own distinct Mn. In other words, for example, two hydrogenated vinyl aromatic polymer blocks within the hydrogenated block copolymer may each have a different Mn.

Methods of making block copolymers are well known in the art. Typically, block copolymers are made by anionic polymerization, examples of which are cited in Anionic Polymerization: Principles and Practical Applications, H.L. Hsieh and R.P. Quirk, Marcel Dekker, New York, 1996. In one embodiment, block copolymers are made by sequential monomer addition to a carbanionic initiator such as *sec*-butyl lithium or *n*-butyl lithium. In another embodiment, the copolymer is made by coupling a triblock material with a divalent coupling agent such as 1,2-dibromoethane, dichlorodimethylsilane, or phenylbenzoate. In this embodiment, a small chain (less than 10 monomer repeat units) of a conjugated diene polymer can be reacted with the vinyl aromatic polymer coupling end to facilitate the coupling reaction. Vinyl aromatic polymer blocks are typically difficult to couple, therefore, this technique is commonly used to achieve coupling of the vinyl aromatic polymer ends. The small chain of diene polymer does not constitute a distinct block since no microphase separation is achieved. Coupling reagents and strategies which have been demonstrated for a variety of anionic polymerizations are discussed in Hsieh and Quirk, Chapter 12, pgs. 307-331. In another embodiment, a difunctional anionic initiator is used to initiate the polymerization from the center of the block system, wherein subsequent monomer additions add equally to both ends of the growing polymer chain. An example of a such a difunctional initiator is 1,3-bis(1-phenylethenyl) benzene treated with organolithium compounds, as described in U.S. Patents 4,200,718 and 4,196,154.

The homopolymer or copolymer is hydrogenated to remove sites of unsaturation. Any method of hydrogenation can be used and such methods typically include the use of metal catalysts supported on an inorganic substrate, such as Pd on BaSO4 (U.S. Patent 5,352,744) and Ni on kieselguhr (U.S. Patent 3,333,024). Additionally, soluble, homogeneous catalysts such those prepared from combinations of transition metal salts of 2-ethylhexanoic acid and alkyl lithiums can be used to fully saturate block copolymers, as described in Die Makromolekulare Chemie, Volume 160, pp. 291, 1972. The hydrogenation can also be achieved using hydrogen and a heterogeneous catalyst such as those described in U.S. Patents 5,352,744, U.S. 5,612,422 and U.S. 5,654,253. The catalysts described therein are heterogeneous catalysts consisting of a metal crystallite supported on a porous silica substrate. An example of a silica supported catalyst which is especially useful in the polymer hydrogenation is a silica which has a surface area of at least 10 m²/g which is synthesized such that is contains pores with diameters ranging between 3000 and 6000 angstroms. This silica is then impregnated with a metal capable of catalyzing hydrogenation of the polymer, such as nickel, cobalt, rhodium, ruthenium, palladium, platinum, other Group VIII metals, combinations or alloys thereof. Other heterogeneous catalysts can also be used, having diameters in the range of 500 to 3,000 angstroms.

Alternatively, the hydrogenation can be conducted in the presence of a mixed hydrogenated catalyst. The mixed hydrogenation catalyst is characterized in that it comprises a mixture of at least two components. The first component comprises any metal which will increase the rate of hydrogenation and includes nickel, cobalt, rhodium, ruthenium, palladium, platinum, other Group VIII metals, or combinations thereof. Preferably rhodium and/or platinum is used. However, platinum is known to be a poor hydrogenation catalyst for nitriles, therefore, platinum would not be preferred in the hydrogenation of nitrile copolymers. The second component used in the mixed hydrogenation catalyst comprises a promoter which inhibits deactivation of the Group VIII metal(s) upon exposure to polar materials, and is herein referred to as the deactivation resistant component. Such components preferably comprise rhenium, molybdenum, tungsten, tantalum or niobium or mixtures thereof.

The amount of the deactivation resistant component is at least an amount which significantly inhibits the deactivation of the Group VIII metal component when exposed to polar impurities within a polymer composition, herein referred to as a deactivation inhibiting amount. Deactivation of the Group VIII metal is evidenced by a significant decrease in hydrogenation reaction rate. This is exemplified in comparisons of a mixed hydrogenation catalyst and a catalyst containing only a Group VIII metal component under identical conditions in the presence of a polar impurity, wherein the catalyst containing only a Group VIII metal component exhibits a hydrogenation reaction rate which is less than 75 percent of the rate achieved with the mixed hydrogenation catalyst.

Preferably, the amount of deactivation resistant component is such that the ratio of the Group VIII metal component to the deactivation resistant component is from 0.5:1 to 10:1, more preferably from 1:1 to 7:1, and most preferably from 1:1 to 5:1.

The catalyst can consist of the components alone, but preferably the catalyst additionally comprises a support on which the components are deposited. In one embodiment, the metals are deposited on a support such as a silica, alumina or carbon. In a more specific embodiment, a silica support having a narrow pore size distribution and surface area greater than 10 meters squared per gram (m²/g) is used.

The pore size distribution, pore volume, and average pore diameter of the support can be obtained via mercury porosimetry following the proceedings of ASTM D-4284-83.

The pore size distribution is typically measured using mercury porosimetry. However, this method is only sufficient for measuring pores of greater than 60 angstroms. Therefore, an additional method must be used to measure pores less than 60 angstroms. One such method is nitrogen desorption according to ASTM D-4641-87 for pore diameters of less than about 600 angstroms. Therefore, narrow pore size distribution is defined as the requirement that at least 98 percent of the pore volume is defined by pores having pore diameters greater than 300 angstroms and that the pore volume measured by nitrogen desorption for pores less than 300 angstroms, be less than 2 percent of the total pore volume measured by mercury porosimetry.

The surface area can be measured according to ASTM D-3663-84. The surface area is typically between 10 and 100 m²/g, preferably between 15 and 90 with most preferably between 50 and 85 m²/g.

The desired average pore diameter is dependent upon the polymer which is to be hydrogenated and its molecular weight (Mn). It is preferable to use supports having higher average pore diameters for the hydrogenation of polymers having higher molecular weights to obtain the desired amount of hydrogenation. For high molecular weight polymers (Mn>200,000 for example), the typical desired surface area can vary from 15 to 25 m²/g and the desired average pore diameter from 3,000 to 4000 angstroms. For lower molecular weight polymers (Mn<1 00,000 for example), the typical desired surface area can vary from 45 to 85 m²/g and the desired average pore diameter from 300 to 700 angstroms.

Silica supports are preferred and can be made by combining potassium silicate in water with a gelation agent, such as formamide, polymerizing and leaching as exemplified in U.S. Patent No. 4,112,032. The silica is then hydrothermally calcined as in Iler, R.K., The Chemistry of Silica, John Wiley and Sons, 1979, pp. 539-544, which generally consists of heating the silica while passing a gas saturated with water over the silica for about 2 hours or more at temperatures from 600°C to 850°C. Hydrothermal calcining results in a narrowing of the pore diameter distribution as well as increasing the average pore diameter. Alternatively, the support can be prepared by processes disclosed in Iler, R.K., The Chemistry of Silica, John Wiley and Sons, 1979, pp. 510-581.

A silica supported catalyst can be made using the process described in U.S. Patent No. 5,110,779. An appropriate metal, metal component, metal containing compound or mixtures thereof, can be deposited on the support by vapor phase deposition, aqueous or nonaqueous impregnation followed by calcination, sublimation or any other conventional method, such as those exemplified in Studies in Surface Science and Catalysis, "Successful Design of Catalysts" V. 44, pg. 146-158, 1989 and Applied Heterogeneous Catalysis pgs. 75-123, Institute Français du Petrole Publications, 1987. In methods of impregnation, the appropriate metal containing compound can be any compound containing a metal, as previously described, which will produce a usable hydrogenation catalyst which is resistant to deactivation. These compounds can be salts, coordination complexes, organometallic compounds or covalent complexes.

Typically, the total metal content of the supported catalyst is from 0.1 to 10 wt. percent based on the total weight of the silica supported catalyst. Preferable amounts are from 2 to 8 wt. percent, more preferably 0.5 to 5 wt. percent based on total catalyst weight.

Promoters, such as alkali, alkali earth or lanthanide containing compounds, can also be used to aid in the dispersion of the metal component onto the silica support or stabilization during the reaction, though their use is not preferred.

The amount of supported catalyst used in the hydrogenation process is much smaller than the amount required in conventional unsaturated polymer hydrogenation reactions due to the high reactivity of the hydrogenation catalysts. Generally, amounts of less than 1 gram of supported catalyst per gram of unsaturated polymer are used, with less than 0.1 gram being preferred and less than 0.05 being more preferred. The amount of supported catalyst used is dependent upon the type of process, whether it is continuous, semi-continuous or batch, and the process conditions, such as temperature, pressure and reaction time wherein typical reaction times may vary from 5 minutes to 5 hours. Continuous operations can typically contain 1 part by weight supported catalyst to 200,000 or more parts unsaturated polymer, since the supported catalyst is reused many times during the course of continuous operation. Typical batch processes can use 1 part by weight supported catalyst to 5,000 parts unsaturated polymer. Higher temperatures and pressures will also enable using smaller amounts of supported catalyst.

The hydrogenation reaction can be conducted in the absence of a solvent but is preferably conducted in a hydrocarbon solvent in which the polymer is soluble and which will not hinder the hydrogenation reaction. Preferably the solvent is a saturated solvent such as cyclohexane, methylcyclohexane, ethylcyclohexane, cyclooctane, cycloheptane, dodecane, dioxane, diethylene glycol dimethyl ether, tetrahydrofuran, isopentane, decahydronaphthalene or mixtures thereof, with cyclohexane being the most preferred.

The temperature at which the hydrogenation is conducted can be any temperature at which hydrogenation occurs without significant degradation of the polymer. Degradation of the polymer can be detected by a decrease in Mn, an increase in polydispersity or a decrease in glass transition temperature, after hydrogenation. Significant degradation in polymers having a polydispersity between 1.0 and 1.2 can be defined as an increase of 30 percent or more in polydispersity after hydrogenation. Preferably, polymer degradation is such that less than a 20 percent increase in polydispersity occurs after hydrogenation, most preferably less than 10 percent. In polymers having polydispersity greater than about 1.2, a significant decrease in molecular weight after hydrogenation indicates that degradation has occurred. Significant degradation in this case is defined as a decrease in Mn of 20 percent or more. Preferably, a Mn decrease after hydrogenation will be less than 10 percent. However, polymers such as poly-alpha-methylstyrene or other alpha substituted vinyl aromatic polymers which are more prone to polymer degradation, can tolerate a decrease in Mn of up to 30 percent.

Typical hydrogenation temperatures are from 40°C preferably from 100°C, more preferably from 110°C, and most preferably from 120°C to 250°C, preferably to 200°C, more preferably to 180°C, and most preferably to 170°C.

The pressure of the hydrogenation reaction is not critical, though hydrogenation rates increase with increasing pressure. Typical pressures range from atmospheric pressure to 70 MPa, with 0.7 to 10.3 MPa being preferred.

The reaction vessel is purged with an inert gas to remove oxygen from the reaction area. Inert gases include but are not limited to nitrogen, helium, and argon, with nitrogen being preferred.

The hydrogenating agent can be any hydrogen producing compound which will efficiently hydrogenate the unsaturated polymer. Hydrogenating agents include but are not limited to hydrogen gas, hydrazine and sodium borohydride. In a preferred embodiment, the hydrogenating agent is hydrogen gas.

The amount of olefinic hydrogenation can be determined using Infrared or proton NMR techniques. The amount of aromatic hydrogenation can be measured using UV-VIS spectroscopy. Cyclohexane solutions of polystyrene give a very distinct absorption band for the aromatic ring at about 260.5 nm. This band gives an absorbance of 1.000 with a solution concentration of .004980 moles of aromatic per liter in a I cm cell. After removing the catalyst via filtration (using a 0.50 micrometer (µm) "TEFLON™" filter, Millipore FHUP047) the reaction mixture is placed in a UV cell and the absorbance measured. The absorbance is dependent upon concentration. The hydrogenated polymer products are typically measured at higher concentrations since they are not diluted before the absorbance is measured. Since the reaction solution is about 15 to 30 times more concentrated than the standards, small amounts of residual unsaturation can be accurately measured.

The level of hydrogenation is dependent upon the polymer being hydrogenated, the amount of catalyst used, the process conditions and the reaction time. The term 'level of hydrogenation' refers to the percentage of the original unsaturated bonds which become saturated upon hydrogenation. The level of hydrogenation in hydrogenated vinyl aromatic polymers is determined using UV-VIS spectrophotometry, while the level of hydrogenation in hydrogenated diene polymers is determined using proton NMR. The level of hydrogenation can be determined by measuring the absorbance of the hydrogenated polymer and comparing to the absorbance of a nonhydrogenated standard. In other words, the absorbance of a 99.5 percent hydrogenated polymer will be 99.5 percent less than the absorbance of the nonhydrogenated polymer.

The level of aromatic hydrogenation of the homopolymer or block copolymer is preferably greater than 90 percent, more preferably greater than 95 percent, even more preferably greater than 98 percent, and most preferably greater than 99.5 percent of the vinyl aromatic polymer segments in the case of a homopolymer or block copolymer; and greater than 95 percent, preferably greater than 99 percent more preferably greater than 99.5 percent, and most preferably greater than 99.9 percent of the conjugated diene polymer block in the case of a block copolymer. For polymers such as poly alpha-methylstyrene, styrene-alpha-methylstyrene copolymer and copolymers of a vinyl aromatic monomer and a comonomer selected from the group consisting of a nitrile, acrylate, acid, ethylene, propylene, maleic anhydride, maleimide, vinyl acetate and vinyl chloride, the level of hydrogenation can be lower, and is dependent upon the polymer being hydrogenated. For these polymers, typically, at least 20 percent aromatic hydrogenation is achieved, preferably at least 30 percent, more preferably at least 50 percent and most preferably at least 90 percent aromatic hydrogenation is achieved.

The amount of total hydrogenated polymer present in the compositions of the present invention is typically from 30, preferably from 35, more preferably from 40 and most preferably from 45 to 90, preferably to 80, more preferably to 75 and most preferably to 70.

Blends of hydrogenated homopolymer with hydrogenated block copolymer, or blends of two different hydrogenated block copolymers can also be used in the compositions of the present invention. In one embodiment, a blend of a hydrogenated homopolymer with hydrogenated copolymer will typically include from 1 to 99 percent homopolymer with 99 to 1 percent block copolymer, preferably from 5 to 95 percent homopolymer with 95 to percent block copolymer and most preferably from 10 to 90 percent homopolymer with 90 to 10 percent block copolymer, based on the total weight of the hydrogenated polymer within the composition.

The inorganic filler component of the composition of the present invention can be any inorganic filler which will increase the toughness of the polymer composition and/or enhance other properties, including, but not limited to, silicon oxides, aluminum oxides, mixtures thereof, glass microspheres, and glass fibers. Preferred inorganic fillers include glass fibers, glass roving or chopped glass fibers having lengths from 0.1 to 10 millimeters and L/D from 5 to 100. Two such suitable glass fibers are available from Owens Coming Fiberglas under the designation OCF 187A™ or 497™.

The amount of inorganic filler used in the composition of the present invention is typically from 10 to 70 weight percent, preferably from 20 to 60, more preferably from 25 to 55 and most preferably from 30 to 50 weight percent, based on the total weight of the composition.

Coupling agents can also be used in order to increase the adhesion between the inorganic filler and the hydrogenated polymer. Such coupling agents typically contain a silicon containing functional group capable of bonding with the inorganic filler, and a second functional group to react with the desired grafting polymer. The grafting polymer is a polymer which is modified with a polar functional group and is also compatible with the hydrogenated polymer of the composition. Silicon containing coupling agents typically comprise a Si functional group capable of bonding to the inorganic filler, such as a methoxy or ethoxy silane, and a second functional group which is reactive with a polar functional group contained within the grafting polymer. The second functional group is typically an amino group. Preferred are aminosilane coupling agents such as 3-aminopropyltrimethoxysilane, and aminopropyltriethoxysilane. Coupling agents are typically used in amounts of 0.1 to 5 weight percent, preferably from 0.5 to 3 weight percent based on the weight of the filler. Methods of applying coupling agents to inorganic fillers is well known in the art and typically involves application using a solution or emulsion of the desired components.

Another aspect of the present invention is a grafting polymer which is a hydrogenated homopolymer or block copolymer as described previously, having additionally been modified with a polar functional group. Suitable polar groups include the acid anhydrides, acid halides, acid amides, sulfones, oxazolines, epoxies, isocyanates, and amino groups. Particularly preferred polar group containing reactants are dicarboxylic acid anhydrides, most preferably maleic anhydride.

Methods of modifying polymers with polar groups are well known to those skilled in the art. Typically, the hydrogenated polymer is reacted with an excess of an appropriate polar group containing compound in the presence of a free radical source. Sources of free radicals include such compounds as peroxides and azo compounds which, upon heating, provide stable free radicals that can induce reaction between the polymer and the polar group containing compound. This reaction can be conducted in a solvent in which the polymer, polar group containing compound, and free radical source are dissolved during the reactive step. Alternately, this type of reaction can be performed in a polymer melt, wherein the molten polymer serves as the solvent.

In one embodiment, hydrogenated polystyrene is reacted with maleic anhydride in the presence of a peroxide initiator to produce a maleated hydrogenated polystyrene.

The components of the composition of the present invention can be combined by any method. Typically, the components are melt blended or solution blended as is well known in the art.

Other additives may also be present in the composition of the hydrogenated block copolymer including, but not limited to antioxidants, slip agents, fire retardants, light and heat stabilizers, antiblock agents, and extension oils.

The following examples are provided to illustrate the present invention. The examples are not intended to limit the scope of the present invention and they should not be so interpreted. Amounts are in weight parts or weight percentages unless otherwise indicated.

### Preparation of hydrogenated polymers

Hydrogenated polymers are prepared using the process described in U.S. Patent No. 5 654 253.

### Preparation of maleated hydrogenated polystyrene (MAHSP)

10 grams of hydrogenated polystyrene (prepared from STYRON 680™, available from The Dow Chemical Company) (Mn of 110,000 and Mw of 200,000) is dissolved in 100 ml of dry toluene. The mixture is shaken for 15 hours and added to a 250 ml round bottom flask equipped with a reflux condenser and nitrogen gas inlet adapter. 2.0 grams of maleic anhydride is added with stirring for 1 hour under nitrogen. 1.0 g of 1,1 bis(tert-butylperoxy)-3,3,5-trimethylcyclohexane is added and the solution is heated to reflux for 6 hours. The heat source is removed and the reaction mixture is cooled to room temperature. The reaction mixture is then diluted with 100 ml toluene and filtered through a scintered glass funnel. The polymer is then recovered by precipitation from methanol and dried under vacuum at 150°C for one hour. The isolated polymer is analyzed by ¹NMR, IR, GPC, and neutron activation to determine oxygen content. The oxygen level is measured at 1.9 percent, corresponding to a maleic anhydride incorporation of 4.7 weight percent based on the weight of the hydrogenated polystyrene.

### Preparation of Examples

Melt blends are prepared using a Brabender twin screw melt mixing apparatus. The hydrogenated polymer and glass fiber is dry mixed in a bag, and melt blended at 240°C for 10 minutes. The samples are then compression molded at 240°C to provide test pieces (2.54 cm x 2.54 cm x .3175 cm). The samples are tested to determine fracture toughness using the compact tension sample geometry (ASTM D 5045-91a).

| | Example 1 | Example 2 | Example 3 | Example 4 |
|---|---|---|---|---|
| HPS¹ | 42.5 g | 35.03 | -- | -- |
| HSBS² | -- | -- | 35.06 | 33.5 |
| Glass Fiber³ | 7.5 g | 15.0 g | 15.05 | 15.06 |
| MAHPs⁴ | -- | -- | -- | 1.54 |

| | | | | |
|---|---|---|---|---|
| ¹HPS is hydrogenated polystyrene with Mn of 135,400 and Mw of 283,490. | | | | |
| ²HSBS is hydrogenated styrene/butadiene/styrene block copolymer with Mn of 101,470 and Mw of 102,640 and 70% styrene prior to hydrogenation. | | | | |
| ³Glass Fiber is PPG 3540™ chopped glass fiber with aminopropylsilane sizing available from PPG. | | | | |
| ⁴MAHPS is maleic anhydride modified hydrogenated polystyrene. | | | | |

| Polymer | Wt. % Glass | Weight % MAHPS | Max Load kg | K_{1C}⁵(Mpa/m^{0.5}) | Energy to Yield kg-cm |
|---|---|---|---|---|---|
| HPS | 0 | 0 | 9.8 | 21.6 | - |
| HSBS | 0 | 0 | 37.9 | 83.6 | 5.2 |
| HPS + glass (Example 1) | 15 | 0 | 20.7 | 45.7 | -- |
| HPS + glass (Example 2) | 30 | 0 | 14.0 | 30.9 | 0.3 |
| HSBS + glass (Example 3) | 30 | 0 | 37.0 | 81.7 | 1.9 |
| HSBS + glass (Example 4) | 30 | 3 | 23.0 | 50.7 | 0.64 |

| | | | | | |
|---|---|---|---|---|---|
| ⁵ K_{1C} is the critical stress intensity factor. K_{1C} = [E(1-v)G_{1C}]^{1/2}, where E is Young's modulus, V is Poisson's ratio, and G_{1C} is the critical energy release rate. | | | | | |

## Claims

1. A functional polar-group-containing polymer obtained by modifying a hydrogenated aromatic polymer having an aromatic hydrogenation level of at least 90% so as to incorporate functional polar groups therein.

2. The polar group modified hydrogenated aromatic polymer of Claim 1, wherein the polar functional group is an acid anhydride, acid halide, acid amide, sulfone, oxazoline, epoxy, isocyanate, or amino group.

3. The polar group modified hydrogenated aromatic polymer of Claim 2, wherein the polar functional group is an acid anhydride.

4. The polar group modified hydrogenated aromatic polymer of Claim 3 wherein the polar functional group is maleic anhydride.

5. A composition comprising:
a) a hydrogenated aromatic polymer, wherein the hydrogenated aromatic polymer has an aromatic hydrogenation level of at least 90 percent,
b) an inorganic filler, and
c) a hydrogenated aromatic polymer, according to any one of Claims 1 to 4.

6. The composition of Claim 5 wherein the hydrogenated aromatic polymer of a) is a hydrogenated polystyrene.

7. The composition of Claim 5 wherein the hydrogenated aromatic polymer of a) is a hydrogenated block copolymer of styrene and a conjugated diene.

8. The composition of Claim 5 comprising from 30 to 90 weight percent of the hydrogenated polymer.

9. The composition of Claim 5 wherein the inorganic filler is glass.

10. The composition of Claim 5 comprising from 10 to 70 weight percent of the inorganic filler, based on the total weight of the composition.

11. The composition of Claim 5 wherein the polar group modified hydrogenated aromatic polymer is a maleated hydrogenated polystyrene,

12. The composition of Claim 5 comprising from 0.1 to 10 weight percent of component (c).

## Patentansprüche

1. Ein funktionelle polare Gruppen enthaltendes Polymer, das durch Modifikation eines hydrierten aromatischen Polymers mit einem Grad an aromatischer Hydrierung von mindestens 90%, um funktionelle polare Gruppen darin einzubringen, erhalten wird.

2. Mit polaren Gruppen modifiziertes hydriertes aromatisches Polymer nach Anspruch 1, wobei die polare funktionelle Gruppe eine Säureanhydrid-, Säurehalogenid-, Säureamid-, Sulfon-, Oxazolin-, Epoxy-, Isocyanat- oder Aminogruppe ist.

3. Mit polaren Gruppen modifiziertes hydriertes aromatisches Polymer nach Anspruch 2, wobei die polare funktionelle Gruppe ein Säureanhydrid ist.

4. Mit polaren Gruppen modifiziertes hydriertes aromatisches Polymer nach Anspruch 3, wobei die polare funktionelle Gruppe ein Maleinsäureanhydrid ist.

5. Zusammensetzung, enthaltend:
a) ein hydriertes aromatisches Polymer, wobei das hydrierte aromatische Polymer einen Grad an aromatischer Hydrierung von mindestens 90% hat.
b) einen anorganischen Füllstoff und
c) ein hydriertes aromatisches Polymer nach einem der Ansprüche 1-4.

6. Zusammensetzung nach Anspruch 5, wobei das hydrierte aromatische Polymer von a) ein hydriertes Polystyrol ist.

7. Zusammensetzung nach Anspruch 5, wobei das hydrierte aromatische Polymer von a) ein hydriertes Blockcopolymer von Styrol und einem konjugierten Dien ist.

8. Zusammensetzung nach Anspruch 5, die 30-90 Gew.-% des hydrierten Polymers enthält.

9. Zusammensetzung nach Anspruch 5, wobei der anorganische Füllstoff Glas ist.

10. Zusammensetzung nach Anspruch 5, die 10-70 Gew.-% des anorganischen Füllstoffs, bezogen auf das Gesamtgewicht der Zusammensetzung, enthält.

11. Zusammensetzung nach Anspruch 5. wobei das mit polaren Gruppen modifizierte hydrierte aromatische Polymer ein maleinsäuremodifiziertes hydriertes Polystyrol ist.

12. Zusammensetzung nach Anspruch 5, die 0,1-10 Gew.-% von Komponente (c) enthält.

## Revendications

1. Polymère à groupes fonctionnels polaires, qu'on a obtenu en modifiant un polymère aromatique hydrogéné, dont le degré d'hydrogénation des cycles aromatiques vaut au moins 90 %, de manière à y incorporer des groupes fonctionnels polaires.

2. Polymère aromatique hydrogéné et modifié par des groupes polaires, conforme à la revendication 1, dans lequel le groupe fonctionnel polaire est un groupe anhydride d'acide, halogénure d'acide, amide d'acide, sulfone, oxazoline, époxyde, isocyanate ou amino.

3. Polymère aromatique hydrogéné et modifié par des groupes polaires, conforme à la revendication 2, dans lequel le groupe fonctionnel polaire est un groupe anhydride d'acide.

4. Polymère aromatique hydrogéné et modifié par des groupes polaires, conforme à la revendication 3, dans lequel le groupe fonctionnel polaire est un groupe anhydride maléique.

5. Composition comprenant :
a) un polymère aromatique hydrogéné, dont le degré d'hydrogénation des cycles aromatiques vaut au moins 90 %,
b) une charge inorganique,
c) et un polymère aromatique hydrogéné conforme à l'une des revendications 1 à 4.

6. Composition conforme à la revendication 5, dans laquelle le polymère aromatique hydrogéné (a) est un polystyrène hydrogéné.

7. Composition conforme à la revendication 5, dans laquelle le polymère aromatique hydrogéné (a) est un copolymère séquencé de styrène et de diène conjugué, hydrogéné.

8. Composition conforme à la revendication 5, qui comporte de 30 à 90 % en poids du polymère hydrogéné.

9. Composition conforme à la revendication 5, dans laquelle la charge inorganique est du verre.

10. Composition conforme à la revendication 5, dans laquelle la charge inorganique représente de 10 à 70 % du poids total de la composition.

11. Composition conforme à la revendication 5, dans laquelle le polymère aromatique hydrogéné et modifié par des groupes polaires est un polystyrène hydrogéné modifié par anhydride maléique.

12. Composition conforme à la revendication 5, qui comporte de 0,1 à 10 % du composant (c).
